# EUROPÄISCHE PATENTSCHRIFT

(11) **EP 3 374 663 B1**
(45) Veröffentlichungstag und Bekanntmachung des Hinweises auf die Patenterteilung: **16.02.2022**
(21) Anmeldenummer: 16757202.3
(22) Anmeldetag: 18.08.2016
(51) Int. Cl.: F16G 11/04, F16G 3/00

(54) **VERFAHREN ZUR HERSTELLUNG EINES ZUGTRÄGERS SOWIE ZUGTRÄGER**
METHOD FOR MANUFACTURING A CARCASS, AND CARCASS
PROCÉDÉ DE FABRICATION D'UN TIRANT AINSI QUE TIRANT

(30) Priorität: 12.11.2015 DE 102015222272
(43) Veröffentlichungstag der Anmeldung: 19.09.2018
(73) Patentinhaber: ContiTech Transportbandsysteme GmbH, 30165 Hannover (DE)
(72) Erfinder: HÜLS, Achim, 30890 Barsinghausen (DE); MÖSCHEN-SIEKMANN, Michael, 37176 Nörten-Hardenberg (DE)
(74) Vertreter: Continental Corporation
(86) Internationale Anmeldenummer: PCT/EP2016/069551
(87) Internationale Veröffentlichungsnummer: WO 2017/080695

(56) Entgegenhaltungen:
- US-A1- 2013 225 346
- US-A1- 2014 230 194
- US-A1- 2014 262 696

## Beschreibung

Die vorliegende Erfindung betrifft ein Verfahren zur Herstellung eines Zugträgers gemäß des Anspruchs 1 sowie einen entsprechenden Zugträger gemäß des Anspruchs 5.

Es sind verschiedene Anwendungen bekannt, bei denen Zugträger wie insbesondere Stahlseile zur Übertragung von Kräften in einer Längsrichtung verwendet werden. Dies können Anwendungen in der Hebetechnik wie z.B. Fahrstühle sein. Derartige Zugträger können bei Segelschiffen z.B. als Wanten verwendet werden. Auch können derartige Zugträger bei Bauwerken wie z.B. Brücken eingesetzt werden.

Bei derartigen Anwendungen können die Enden der Zugträger z.B. durch Spleißen der einzelnen Zugträgerlitzen als Öse ausgeführt werden, um durch die Öse eine Befestigung zu führen. Alternativ können die Enden der Zugträger auch durch Einklemmen bzw. Verpressen befestigt werden. In diesem Fall erfolgt die Übertragung der Zugkräfte über die Klemm- bzw. Pressverbindung im Wesentlichen als kraftschlüssige Verbindung zwischen den einzelnen Litzen des Zugträgers wie z.B. des Stahlseils und dem umgebenden Material des Verbindungspartners.

Nachteilig ist hierbei, dass auch trotz Verpressung mit sehr starken Kräften üblicherweise zwischen zumindest einigen Litzen des Zugträgers Lufteinschlüsse verbleiben. Diese Zwischenräume der Zugträgerlitzen können nicht zur kraftschlüssigen Verbindung der Zugträgerlitzen beitragen, weil in diesen Bereichen kein Kontakt der Materialien zueinander zustande kommen kann. Dies kann die maximal übertragbare Kraft der Klemmverbindung reduzieren.

Es sind ferner verschiedene Produkte mit in Längsrichtung verlaufenden Zugträgern wie insbesondere Stahlseilen bekannt, wobei die Zugträger der Übertragung der Zugkräfte in Längsrichtung dienen. Zu diesen Produkten gehören z.B. Fördergurte, Antriebsriemen, Laufbänder für Kettenfahrzeuge und dergleichen. Bei diesen Produkten sind die Zugträger üblicherweise in einem elastischen Material wie insbesondere einem elastomeren Material eingebettet, welches insbesondere ein vulkanisierter Kautschuk sein kann.

Derartige Produkte werden häufig endlos geschlossen hergestellt oder an ihren offenen Enden mit Anschlusselementen versehen, um sie am Einsatzort endlos schließen zu können. Zum endlosen Schließen können die Enden der Zugträger durch Vulkanisieren des elastischen Materials miteinander verbunden werden. Alternativ ist es jedoch auch bekannt, die offenen Enden miteinander bzw. ein offenes Ende mit einem Anschlusselement mittels einer kraftschlüssigen Klemm- bzw. Pressverbindung zu verbinden.

Die DE 10 2009 044 080 A1 betrifft einen Fördergurt mit einer Zugträgerlage aus parallel verlaufenden Stahlseilen. Der Fördergurt weist an jedem Ende eine scharnierartige Ausbildung zum Zusammenkoppeln mit einem anderen Gurtende auf. Die Teilscharniere weisen jeweils einen Scharnierriegel auf, an dem jeweils eine integrierte Spannplatte angeformt ist. Die integrierte Spannplatte ist in der einen Gurtaußenfläche des Fördergurtes eingelassen. Auf der entgegengesetzten Gurtaußenfläche ist jeweils eine korrespondierende, separate Spannplatte in die dortige Gummideckschicht eingelassen. Die jeweiligen Spannplatten jedes Teilscharniers spannen das jeweilige dickenreduzierte Gurtende zwischen sich fest ein, so dass die Gurtenden aus elastomerem Material mit den eingebetteten Stahlseilende zwischen der Spannplatte und dem Scharnierriegel eingeklemmt gehalten werden können.

Nachteilig ist hierbei, dass die Klemmverbindung der Gurtenden zwischen den Spannplatten über das elastomere Material auf die dort eingebetteten Zugträger ausgeübt wird. Hierbei kann sich das elastische Material schwächend auf diese Klemmverbindung auswirken, weil es die Zugträger von außen vollständig umgibt und der Klemmkraft seitlich elastisch ausweichen kann. Mit anderen Worten kann die Gummiummantelung der Enden der Zugträger wie eine Gleitschicht wirken, was die maximale Klemmkraft der Klemm- bzw. Pressverbindung deutlich reduzieren kann.

Die DE 10 2010 037 697 A1 betrifft einen Fördergurt mit einer Zugträgerlage aus parallel verlaufenden Stahlseilen. Der Fördergurt weist an jedem Ende eine scharnierartige Ausbildung zum Zusammenkoppeln mit einem anderen Gurtende auf. Die Teilscharniere weisen jeweils einen Scharnierriegel auf, an dem jeweils eine abgesetzte Scharnierplatte angeformt ist. Die Enden der Stahlseile stecken in entsprechenden Längsbohrungen der Scharnierplatte und sind dort positionssicher durch Verpressen der Scharnierplatte fixiert.

Die DE 10 2011 055 168 A1 betrifft einen Gurt oder ein Gurtsegment mit im Wesentlichen in Längsrichtung des Gurtes oder Gurtsegments verlaufenden, im Wesentlichen parallel zueinander angeordneten Stahlseilen. Der Gurt oder das Gurtsegment weist wenigstens ein offenes Ende auf. Der Gurt oder das Gurtsegment weist an dem offenen Ende eine Befestigungsvorrichtung auf, die mit zumindest einem Teil der Stahlseile mittels Klemmung verbunden ist.

Die DE 10 2012 104 477 A1 betrifft einen Gurtendekörper oder Gurtsegmentendekörper mit einer Anordnung zum Zusammenkoppeln mit einem weiteren korrespondieren Gurtendekörper oder Gurtsegmentendekörper und einer Mehrzahl von Klemmöffnungen und Klemmaussparungen zur geklemmten Aufnahme von Zugträgern eines Gurtes oder Gurtsegments, wobei sich die Anordnung zum Zusammenkoppeln und die Klemmöffnungen im Wesentlichen in Längsrichtung gegenüber liegen. Der Gurtendekörper oder Gurtsegmentendekörper ist derart ausgebildet, dass sich die ungeklemmten Bereiche der geklemmten Zugträger im Betrieb immer in der neutralen Phase befinden.

Ferner offenbart US 2014/0262696 A1 den Obergriff des Anspruchs 1.

Die zuvor beschriebenen Fördergurte bzw. Gurte können dadurch hergestellt werden, indem die Zugträger über die gesamte Länge des Fördergurtes in das elastomere Material des Fördergurtes bzw. Gurtes eingebettet und dort einvulkanisiert werden. Sollen die Zugträger zum Verbinden des Fördergurtes mittels Klemmverbindung wie zuvor beschrieben verwendet werden, so sind die Zugträgerenden durch z.B. Abschneiden bzw. Abkratzen des vulkanisierten Materials wieder freizulegen. Dies bedeutet nicht nur einen weiteren zeitaufwendigen und anstrengenden Arbeitsschritt, der üblicherweise manuell ausgeführt werden muss, sondern kann auch zu Beschädigungen der Zugträger bzw. der Zugträgerlitzen führen.

Alternativ können die Enden der Zugträger bei der Vulkanisation freigelassen werden, um die Zugträgerenden zum Verpressen mittels Klemmverbindung wie zuvor beschrieben verwendet werden zu können. Auf diese Weise kann der Arbeitsschritt des nachträglichen Entfernens des elastomeren Materials nach der Vulkanisation von den Zugträgerenden vermieden werden, was Zeit und Aufwand sparen sowie Beschädigungen vermeiden kann. Nachteilig ist hierbei jedoch, dass sich in diesem Fall weiterhin Lufteinschlüsse zwischen den einzelnen Litzen der Zugträger bilden können, so dass an diesen Stellen der Zwischenräume der Zugträgerlitzen keine Klemmkräfte übertragen werden können.

Zur Vermeidung derartiger Lufteinschlüsse zwischen den einzelnen Litzen der Zugträger könnte die Kraft des Verpressens erhöht werden, was jedoch einen zusätzlichen Aufwand bedeutet und nur mit entsprechend starken Pressen möglich ist. Auch kann ein sehr starkes Verpressen zu einer Beschädigung der Litzen der Zugträger führen. Hierdurch kann die Kraft des Verpressens begrenzt sein, wodurch gleichzeitig die Haltekraft derartiger Pressverbindungen begrenzt wird. Dies kann den Einsatz von verpressten Zugträgern auf Anwendungen mit geringeren Zugkräften einschränken.

Eine Aufgabe der vorliegenden Erfindung ist es, ein Verfahren zur Herstellung eines Zugträgers der eingangs beschriebenen Art bereit zu stellen, so dass die Klemmwirkung zwischen den Zugträgerlitzen verbessert werden kann. Zumindest soll ein alternatives Verfahren zur bekannten Herstellung eines Zugträgers bereitgestellt werden.

Die Aufgabe wird erfindungsgemäß durch ein Verfahren zur Herstellung eines Zugträgers mit den Merkmalen gemäß Anspruch 1 sowie einen Gurt oder ein Gurtsegment mit den Merkmalen gemäß Anspruch 5 gelöst. Vorteilhafte Weiterbildungen sind in den Unteransprüchen beschrieben.

Somit betrifft die vorliegende Erfindung ein Verfahren zur Herstellung eines Zugträgers, insbesondere zur Verwendung bei einem Gurt oder bei einem Gurtsegment, mit den Schritten:
- Herrichten eines Zugträgers, welcher eine Mehrzahl von Zugträgerlitzen aufweist. Das Verfahren ist gekennzeichnet durch,
- wenigstens an einem offenen Ende des Zugträgers, Füllen wenigstens eines Teils der Zwischenräume der Zugträgerlitzen mit einem Füllmaterial, wobei der Zugträger nach außen frei von dem Füllmaterial bleibt.

Unter den Zwischenräumen sind die Hohlräume zu verstehen, welche sich zwischen den einzelnen Litzen des Zugträgers bilden können. Dies kann beispielsweise dadurch geschehen, dass die Litzen einen kreisrunden Querschnitt aufweisen, so dass die miteinander zum Zugträger verdrillten einzelnen Litzen zwischen einander Hohlräume aufweisen können, in denen kein Kontakt der Litzen untereinander besteht.

Unter dem Freibleiben des Zugträgers nach außen ist zu verstehen, dass im Nachhinein kein Füllmaterial oder sonstiges Material entfernt werden muss, um lediglich eine Füllung der Zwischenräume der Zugträgerlitzen mit dem Füllmaterial zu erreichen. Dies würde zusätzlichen Aufwand bedeuten sowie könnte das nachträgliche Entfernen zu Beschädigungen der Zugträgerlitzen führen. Mit anderen Worten wird durch das Freibleiben des Zugträgers erreicht, dass durchgängig das Material des Zugträgers bzw. der Zugträgerlitzen nach außen in Erscheinung tritt und damit als Kontaktpartner beim Verpressen bzw. beim Verklemmen zur Verfügung stehen kann.

Dabei liegt der vorliegenden Erfindung die Erkenntnis zugrunde, dass die Festigkeit der Verbindung von einer Befestigungsvorrichtung oder dergleichen und einem Zugträger von diversen Faktoren abhängig sein kann. Einer dieser Faktoren können die Zwischenräume der Zugträgerlitzen sein, in die die Litzen beim Verpressen ausweichen können, so dass sie weniger stark verpresst werden. Ferner kann an den Stellen der Lufteinschlüsse zwischen den Litzen keine Kraft zwischen den einzelnen Litzen übertragen werden, was die Press- bzw. Klemmverbindung ebenfalls schwächen kann.

Wünschenswert ist daher eine Festigkeit der Press- bzw. Klemmverbindung als Ganzes und möglichst im Bereich der Bruchfestigkeit des Zugträgers, damit die Press- bzw. Klemmverbindung nicht die Schwachstelle der Zugkraftübertragung darstellt.

Dies wird erfindungsgemäß dadurch erreicht indem die Festigkeit der Press- bzw. Klemmverbindung erhöht wird. Dies wird dadurch erreicht, dass die Zwischenräume zwischen den Litzen zumindest teilweise mit einem Füllmaterial gefüllt werden. Hierdurch können die Litzen stärker miteinander verpresst werden. Ferner kann eine bessere Kraftübertragung zwischen den Litzen erreicht werden, als dies über die dort üblicherweise eingeschlossene Luft bisher möglich ist. Hierdurch kann eine Verbesserung der Kraftübertragung zwischen den Litzen des Zugträgers und der Befestigungsvorrichtung erreicht werden.

Vorteilhaft ist an dem Effekt auch, dass die Litzen beim Verpressen nicht in die Hohlräume des Zugträgers ausweichen und der Verpressung nachgeben können. Mit anderen Worten können die Litzen durch die Unterstützung des Füllmaterials davor bewahrt werden, sich zu deformieren. Dadurch kann die Struktur der Aussenseite des Zugträgers erhalten bleiben. Auch kann die Geometrie der Oberfläche des Zugträgers neben dem Kraftschluss besser zu einem Formschluss der Verpressung beitragen. Vorteilhaft ist auch, dass auf diese Weise die Beschädigungsmöglichkeit einzelner Litzen beim Verpressen reduziert werden kann.

Vorteilhaft ist hierbei weiterhin, dass die Füllung der Zwischenräume des Zugträgers in der Lage sein kann, die Haftreibung zwischen den einzelnen Zugträgerlitzen bzw. zwischen Zugträger und Befestigungsvorrichtung zu erhöhen.

Vorteilhaft ist auch, dass eine Erhöhung der Festigkeit der Press- bzw. Klemmverbindung erreicht werden kann, ohne hierfür die Länge der Verbindung zu erhöhen. Dies kann insbesondere bei Anwendungen mit begrenzten Umlenkradien bei Fördergurten vorteilhaft sein.

Vorteilhaft ist ferner, dass durch die Vermeidung von Lufteinschlüssen und Hohlräumen zwischen den Zugträgerlitzen die Möglichkeit zur Korrosion an diesen Stellen vermieden bzw. reduziert werden kann.

Die Umsetzung dieses Verfahrens kann in üblichen Form- und Vulkanisationsprozessen wie z.B. bei der Herstellung von Stahlseil-Transportgurten üblich erfolgen. Hierbei werden die Zugträger in die Form bzw. Presse eingelegt und dort die Zwischenräume zumindest teilweise mit dem Füllmaterial gefüllt, welches dann in der Form bzw. Presse verfestigt werden kann, so dass das Füllmaterial sicher in den Zwischenräumen der Litzen gehalten werden kann. Zur Herstellung der Pressverbindung kann der Zugträger danach mit einer Hülse, einem Pressgelenk oder einer anderen Befestigungsvorrichtung verpresst werden.

Gemäß einem Aspekt der vorliegenden Erfindung ist das Füllmaterial ein elastisches aber inkompressibles Material. Dies kann den Vorteil haben, dass durch ein derartiges Füllmaterial die Flexibilität des Zugträgers im Biegebereich, d.h. außerhalb der Verpressung, erhalten bleiben kann. Auf diese Weise kann ein Knicken und hierdurch ein Beschädigen der Zugträger vermieden werden. Vorteilhaft ist auch, dass bei gleichem Umformgrad ebenfalls die Ausreisskraft erhöht werden kann bzw. bei einem geringeren Umformgrad und damit bei höherer Flexibilität die gleiche Ausreisskraft erzeugt werden kann.

Vorzugsweise ist das Füllmaterial ferner adhäsiv. Vorteilhaft ist hierbei, dass auf diese Weise eine hohe Haftwirkung zwischen den Kontaktpartnern erreicht werden kann.

Gemäß der vorliegenden Erfindung ist das Füllmaterial ein Elastomermaterial. Das elastomere Füllmaterial kann beispielsweise vulkanisiertes Gummi sein. Hierzu können die Zwischenräume der Zugträgerlitzen mit einem elastomeren Füllmaterial gefüllt und dann vulkanisiert werden. Vorteilhaft ist hierbei, dass ein vulkanisiertes elastomeres Material extrem inkompressibel sein kann, vergleichbar zu Stahl. Hierdurch kann insbesondere in der Kombination mit Zugträgerlitzen aus Stahl eine deutlich verbesserte Presswirkung untereinander erreicht werden. Gleichzeitig kann durch die Flexibilität des elastomeren Materials eine Beschädigung der Litzen beim Verpressen reduziert bzw. vermieden werden.

Gemäß einem weiteren Aspekt der vorliegenden Erfindung ist das Füllmaterial ein Polyurethan. Je nach Anwendung können hierbei thermoplastische oder vernetzte Polymere zum Einsatz kommen. Hierdurch können vergleichbare Effekte wie mit einem kautschukbasiertem Elastomer auf alternative Art und Weise erreicht werden. Vulkanisierter Kautschuk und Polyurethane können im Gegensatz zu anderen denkbaren Füllmaterialien den Vorteil aufweisen, dass eine starke Bindung an den Zugträger gebildet und eine sofortige oder spätere Verdrängung des Füllmaterials verhindert werden kann. Gemäß einem weiteren Aspekt der vorliegenden Erfindung werden die Zwischenräume der Zugträgerlitzen lediglich am offenen Ende des Zugträgers zumindest teilweise so weit in Längsrichtung mit dem Füllmaterial gefüllt, wie das offene Ende zur Verbindung mittels Klemmung verwendet werden soll. Auf diese Weise kann der Aufwand der Füllung der Zwischenräume des Zugträgers auf den Bereich beschränkt werden, wo die vorteilhaften Effekte später bei einer Klemmverbindung genutzt werden sollen. Somit können die hierdurch bewirkten Vorteile mit möglichst geringem Aufwand genutzt werden.

Gemäß einem weiteren Aspekt der vorliegenden Erfindung werden alle Zwischenräume der Zugträgerlitzen vollständig mit dem Füllmaterial gefüllt. Auf diese Weise kann die vorteilhafte Wirkung maximiert werden.

Gemäß einem weiteren Aspekt der vorliegenden Erfindung ist der Zugträger ein Stahlseil. Auf diese Weise können hohe Zugkräfte bei geringem Querschnitt des Zugträgers in Längsrichtung übertragen werden.

Die vorliegende Erfindung betrifft auch einen Gurt oder ein Gurtsegment mit wenigstens einem im Wesentlichen in Längsrichtung des Gurtes oder des Gurtsegments verlaufenden Zugträger, welcher mittels eines Verfahrens wie zuvor beschrieben hergestellt wurde. Auf diese Weise können die zuvor beschriebenen Vorteile eines derartigen hergestellten Zugträgers auch bei einem Gurt oder Gurtsegment genutzt werden.

Gemäß einem weiteren Aspekt der vorliegenden Erfindung weist der Gurt oder das Gurtsegment wenigstens eine Befestigungsvorrichtung auf, die mit einem offenen Ende des Zugträgers mittels Klemmung verbunden ist. Auf diese Weise kann der Gurt bzw. das Gurtsegment mittels einer erfindungsgemäß verbesserten Klemmung bzw. Verpressung über eine Befestigungsvorrichtung in Abhängigkeit des Anwendungsfalls befestigt werden.

Gemäß einem weiteren Aspekt der vorliegenden Erfindung ist eine Mehrzahl von im Wesentlichen in Längsrichtung des Gurtes oder des Gurtsegments verlaufenden, im Wesentlichen parallel zueinander angeordneten Zugträgern vorgesehen. Auf diese Weise können die über die Zugträger übertragbaren Kräfte erhöht werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer Befestigungsvorrichtung zur Aufnahme eines erfindungsgemäßen Zugträgers;
- Fig. 2: eine perspektivische schematische Darstellung der Befestigungsvorrichtung der Fig. 1 mit verpressten erfindungsgemäßen Zugträgern;
- Fig. 3: eine Darstellung eines Querschnitts durch die Befestigungsvorrichtung der Fig. 2; und
- Fig. 4: eine Detaildarstellung der Fig. 3.

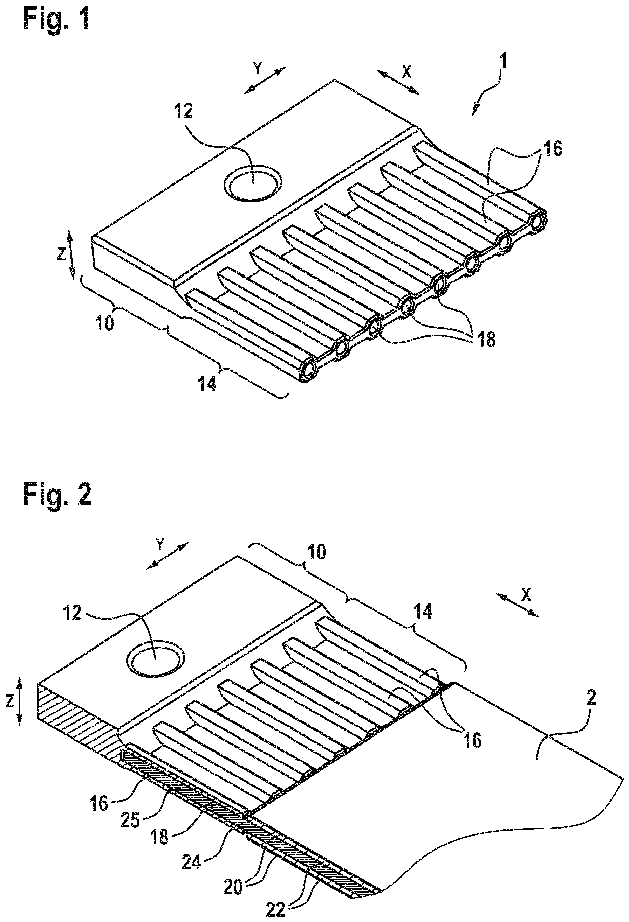

Fig. 1 zeigt eine perspektivische schematische Darstellung einer Befestigungsvorrichtung 1 zur Aufnahme eines erfindungsgemäßen Zugträgers 24. Fig. 2 zeigt eine perspektivische schematische Darstellung der Befestigungsvorrichtung 1 der Fig. 1 mit verpressten erfindungsgemäßen Zugträgern 24. Die Anordnung von Befestigungsvorrichtung 1 und Gurt 2 bzw. Gurtsegment 2 erstreckt sich im Wesentlichen in einer Längsrichtung X, welche auch als Tiefe X bezeichnet werden kann. Hierzu senkrecht erstreckt sich eine Querrichtung Y, welche auch als Breite Y bezeichnet werden kann. Senkrecht zur Längsrichtung X und senkrecht zur Querrichtung Y erstreckt sich eine senkrechte Richtung Z, welche auch als Höhe Z bezeichnet werden kann.

Die Befestigungsvorrichtung 1 weist einen Kopfbereich 10 auf, in dem ein Verbindungselement 12 in Form einer Aussparung 12 angeordnet ist. Über diese Aussparung 12 kann eine Anbindung der Befestigungsvorrichtung 1 an andere Körper erfolgen. Die Befestigungsvorrichtung 1 weist ferner einen Klemmbereich 14 auf, in dem eine Mehrzahl von parallel in Längsrichtung X zueinander angeordneten Klemmstegen 16 ausgebildet sind, welche in Querrichtung Y zueinander beabstandet sind. Die einzelnen Klemmenstege 16 weisen jeweils eine Längsbohrung 18 in Längsrichtung X auf, siehe z.B. Fig. 1.

Der Gurt 2 bzw. das Gurtsegment 2 weist in der Höhe Z nach oben bzw. nach unten jeweils eine Gummideckschicht 20 auf, welche eine Kerngummischicht 22 zwischen sich einschließen. In der Kerngummischicht 22 ist eine Mehrzahl von Zugträgern 24 in Form von Stahlseilen 24 in dem elastomeren Material eingebettet. Die Stahlseile 24 verlaufen in Längsrichtung X und sind in Querrichtung Y zueinander beabstandet. Die Zugträgerenden 25 bzw. Stahlseilenden 25 ragen mit ihren offenen Enden in Längsrichtung X aus der Kerngummischicht 22 heraus und sind in den Längsbohrungen 18 der Befestigungsvorrichtung 1 jeweils einzeln verpresst, siehe z.B. Fig. 2.

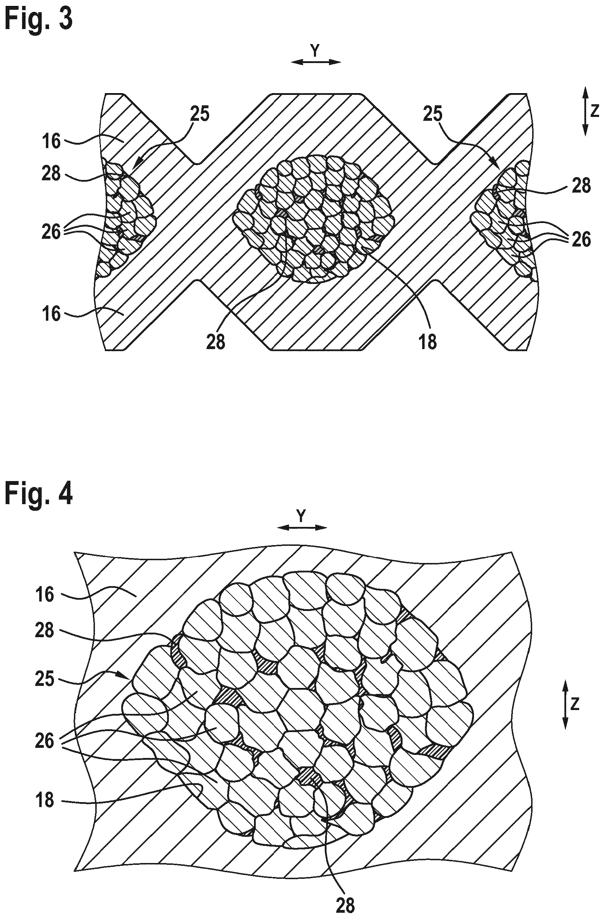

Fig. 3 zeigt eine Darstellung eines Querschnitts durch die Befestigungsvorrichtung 1 der Fig. 2. Fig. 4 zeigt eine Detaildarstellung der Fig. 3. In diesen beiden Querschnittdarstellungen sind jeweils die einzelnen Zugträgerlitzen 26 bzw. Stahlseillitzen 26 der Zugträger 24 bzw. Stahlseile 24 zu erkennen, welche zu den Zugträgern 24 bzw.

Stahlseilen 24 miteinander verdrillt sind.

Erfindungsgemäß sind die Zwischenräume zwischen den Stahlseillitzen 26 mit einem Füllmaterial 28 in Form eines Elastomermaterials 28 gefüllt. Auf diese Weise werden die bisher üblichen Einschlüsse von Luft zwischen den Stahlseillitzen 26 vermieden. Ferner ist das elastomere Material 28 auch inkrompressibel wie die Stahlseillitzen 26, so dass die Presswirkung zwischen den einzelnen Stahlseillitzen 26 durch die elastomere Füllung 28 deutlich verstärkt werden kann. Desweiteren kann eine starke Bindung des Elastomermaterials 28 an die Stahlseillitzen 26 erreicht werden. Gleichzeitig kann durch die Elastizität der elastomeren Füllung 28 erreicht werden, dass ein Knicken der Stahlseillitzen 26 beim Verpressen vermieden werden kann, welches zu Beschädigungen der Stahlseillitzen 26 führen könnte.

### Bezugszeichenliste

### (Teil der Beschreibung)

- X: Längsrichtung, Tiefe
- Y: Querrichtung, Breite
- Z: senkrechte Richtung, Höhe

- 1: Befestigungsvorrichtung
- 10: Kopfbereich der Befestigungsvorrichtung 1
- 12: Verbindungselement bzw. Aussparung des Kopfstücks 10
- 14: Klemmbereich der Befestigungsvorrichtung 1
- 16: Klemmstege des Klemmbereichs 14
- 18: Längsbohrungen des Klemmbereichs 14

- 2: Gurt oder Gurtsegment
- 20: Gummideckschicht, obere und untere
- 22: Kerngummischicht
- 24: Zugträger, Stahlseile
- 25: offenes Zugträgerende, offenes Stahlseilende
- 26: Zugträgerlitzen, Stahlseillitzen
- 28: Füllmaterial, Elastomermaterial

## Patentansprüche

1. Verfahren zur Herstellung eines Zugträgers (24), insbesondere zur Verwendung bei einem Gurt (2) oder bei einem Gurtsegment (2), mit den Schritten:
Herrichten eines Zugträgers (24), welcher eine Mehrzahl von Zugträgerlitzen (26) aufweist, wobei der Zugträger ein Stahlseil (24) ist,
**gekennzeichnet durch,**
wenigstens an einem offenen Ende (25) des Zugträgers (24), Füllen wenigstens eines
Teils der Zwischenräume der Zugträgerlitzen (26) mit einem Füllmaterial (28), wobei das Füllmaterial (28) ein Elastomermaterial ist,
wobei der Zugträger (24) nach außen frei von dem Füllmaterial (28) bleibt,
wobei das Füllmaterial (28) ein elastisches aber inkompressibles Material (28) ist.

2. Verfahren gemäß Anspruch 1, wobei das Füllmaterial (28) ein Polyurethan (28) ist.

3. Verfahren gemäß einem der vorherigen Ansprüche, wobei die Zwischenräume der Zugträgerlitzen (26) lediglich am offenen Ende (25) des Zugträgers (24) zumindest teilweise so weit in Längsrichtung (X) mit dem Füllmaterial (28) gefüllt werden, wie das offene Ende (25) zur Verbindung mittels Klemmung verwendet werden soll.

4. Verfahren gemäß einem der vorherigen Ansprüche, wobei alle Zwischenräume der Zugträgerlitzen (26) vollständig mit dem Füllmaterial (28) gefüllt werden.

5. Gurt (2) oder Gurtsegment (2), mit wenigstens einem im Wesentlichen in Längsrichtung (X) des Gurtes (2) oder des Gurtsegments (2) verlaufenden Zugträger (24), welcher mittels eines Verfahrens gemäß einem der vorherigen Ansprüche hergestellt wurde.

6. Gurt (2) oder Gurtsegment (2) gemäß Anspruch 7, wobei der Gurt (2) oder das Gurtsegment (2) wenigstens eine Befestigungsvorrichtung (1) aufweist, die mit einem offenen Ende (25) des Zugträgers (24) mittels Klemmung verbunden ist.

7. Gurt (2) oder Gurtsegment (2) gemäß Anspruch 7 oder 8, wobei eine Mehrzahl von im Wesentlichen in Längsrichtung (X) des Gurtes (2) oder des Gurtsegments (2) verlaufenden, im Wesentlichen parallel zueinander angeordneten Zugträgern (24) vorgesehen ist.

## Claims

1. Method for producing a tension member (24), in particular for use in a belt (2) or in a belt segment (2), having the steps of:
preparing a tension member (24) which has a plurality of tension member strands (26), wherein the tension member is a steel cable (24),
**characterized by**
filling at least some of the intermediate spaces between the tension member strands (26) with a filling material (28) at least at an open end (25) of the tension member (24), wherein the filling material (28) is an elastomer material,
wherein the tension member (24) remains free of the filling material (28) toward the outside,
wherein the filling material (28) is an elastic but incompressible material (28).

2. Method according to Claim 1,
wherein the filling material (28) is a polyurethane (28) .

3. Method according to one of the preceding claims,
wherein the intermediate spaces between the tension member strands (26) are filled, only at the open end (25) of the tension member (24), with the filling material (28) at least partially as far in the longitudinal direction (X) as the open end (25) is to be used for connecting by clamping.

4. Method according to one of the preceding claims,
wherein all the intermediate spaces between the tension member strands (26) are completely filled with the filling material (28).

5. Belt (2) or belt segment (2), having at least one tension member (24) which runs essentially in the longitudinal direction (X) of the belt (2) or of the belt segment (2) and which has been produced by means of a method according to one of the preceding claims.

6. Belt (2) or belt segment (2) according to Claim 5, wherein the belt (2) or the belt segment (2) has at least one fastening device (1) which is connected to an open end (25) of the tension member (24) by clamping.

7. Belt (2) or belt segment (2) according to Claim 5 or 6,
wherein a plurality of tension members (24) which run essentially in the longitudinal direction (X) of the belt (2) or of the belt segment (2) and which are arranged essentially parallel to one another are provided.

## Revendications

1. Procédé de fabrication d'un tendeur (24), destiné notamment à être utilisé dans une courroie (2) ou dans un segment de courroie (2), ledit procédé comprenant les étapes suivantes :
préparer un tendeur (24) qui comporte une pluralité de brins de tendeur (26), le tendeur étant un câble en acier (24),
**caractérisé par** l'étape suivante,
au moins à une extrémité ouverte (25) du tendeur (24), remplir au moins une partie des interstices entre les brins de tendeur (26) avec une matière de remplissage (28), la matière de remplissage (28) étant une matière élastomère,
le tendeur (24) restant exempt de matière de remplissage (28) vers l'extérieur,
la matière de remplissage (28) étant une matière (28) élastique mais incompressible.

2. Procédé selon la revendication 1,
la matière de remplissage (28) étant un polyuréthane (28) .

3. Procédé selon l'une des revendications précédentes,
les interstices entre les brins de tendeur (26) étant remplis au moins partiellement de matière de remplissage (28) seulement à l'extrémité ouverte (25) du tendeur (24) de manière suffisante dans la direction longitudinale (X) pour pouvoir utiliser l'extrémité ouverte (25) pour la liaison par serrage.

4. Procédé selon l'une des revendications précédentes,
tous les interstices entre les brins de tendeur (26) étant entièrement remplis de matière de remplissage (28) .

5. Courroie (2) ou segment de courroie (2), comprenant
au moins un tendeur (24) qui s'étend sensiblement dans la direction longitudinale (X) de la courroie (2) ou du segment de courroie (2) et qui a été fabriqué au moyen d'un procédé selon l'une des revendications précédentes.

6. Courroie (2) ou segment de courroie (2) selon la revendication 5,
la courroie (2) ou le segment de courroie (2) comportant au moins un dispositif de fixation (1) qui est relié à une extrémité ouverte (25) du tendeur (24) par serrage.

7. Courroie (2) ou segment de courroie (2) selon la revendication 5 ou 6,
plusieurs tendeurs (24) étant prévus qui s'étendent sensiblement dans la direction longitudinale (X) de la courroie (2) ou du segment de courroie (2) et qui sont disposés sensiblement parallèlement les uns aux autres.
